# EUROPEAN PATENT APPLICATION

(11) **EP 3 809 797 A1**
(43) Date of publication of application: **21.04.2021**
(21) Application number: 18922921.4
(22) Date of filing: 12.06.2018
(51) Int. Cl.: H04W 88/04, H04W 4/40

(54) **USER DEVICE AND BASE STATION DEVICE**

(71) Applicant: NTT DoCoMo, Inc., Tokyo 100-6150 (JP)
(72) Inventor: OSAWA, Ryosuke, Tokyo 100-6150 (JP); WANG, Huan, Beijing 100190 (CN); ZHENG, Xufei, Beijing 100190 (CN); HOU, Xiaolin, Beijing 100190 (CN)
(74) Representative: Hoffmann Eitle
(86) International application number: PCT/JP2018/022468
(87) International publication number: WO 2019/239499

(57) **Abstract**

A user equipment includes a communication unit that communicates with another user equipment and a base station apparatus; a notification unit that transmits, to the other user equipment, information indicating whether a relay function is provided; and a control unit that operates as a relay for relaying communication between the other user equipment and the base station apparatus.

## Description

### TECHNICAL FIELD

The present invention relates to a user equipment and a base station apparatus in a radio communication system.

### BACKGROUND ART

In LTE (Long Term Evolution) and LTE successor systems (e.g., LTE-A (LTE Advanced), NR (New Radio) (also called 5G)), D2D (Device to Device) technology in which user devices communicate directly without going through a radio base station has been studied (e.g., Non-Patent Document 1).

The D2D reduces traffic between user equipment and a base station apparatus and enables communication between the user devices even if the base station apparatus becomes unable to communicate in an event of a disaster, etc. In the 3GPP (3rd Generation Partnership Project), D2D is referred to as "sidelink", but the more general term D2D is used herein. However, in the embodiments described below, sidelink is also used as necessary.

D2D is broadly divided into D2D discovery for discovering any other user equipment capable of communicating, and D2D communication (also referred to as D2D direct communication, D2D communication, inter-terminal direct communication, etc.). In the following, when D2D communication, D2D discovery, etc., are not distinguished in particular, they are simply referred to as D2D. Signals transmitted and received in D2D are called D2D signals. Various use cases of V2X (Vehicle to Everything) services in 5G have been considered (e.g., Non-patent document 2).

### Prior Art Document

### [Non-Patent Document]

Non-patent Document 1: 3GPP TS 36.211 V15.1.0 (2018-03)
Non-patent Document 2: 3GPP TR 22.886 V15.1.0 (2017-03)

### SUMMARY OF THE INVENTION

### [PROBLEM TO BE SOLVED BY THE INVENTION]

In D2D communication assuming V2X, when performing a relay function to relay D2D communication from a user equipment to a base station apparatus, in order to establish a connection with a user equipment performing a relay function, it is necessary to obtain information on the user equipment having a relay function at a user equipment performing a D2D communication.

The present invention has been made in view of the above-described points, and an object is to obtain information required by a terminal in order to establish a connection with a terminal having a relay function in inter-terminal direct communication.

### [MEANS FOR SOLVING THE PROBLEM]

According to the disclosed technology, there is provided a user equipment including a communication unit that communicates with another user equipment and a base station apparatus; a notification unit that transmits, to the other user equipment, information indicating whether a relay function is provided; and a control unit that operates as a relay for relaying a communication between the other user equipment and the base station apparatus.

### [ADVANTAGE OF THE INVENTION]

According to the disclosed technology, information required by a terminal to establish a connection with a terminal having a relay function can be obtained in the inter-terminal direct communication.

### BRIEF DESCRIPTION OF DRAWINGS

Fig. 1 is a diagram illustrating V2X.
Fig. 2 is a diagram illustrating a radio communication system according to an embodiment of the present invention.
Fig. 3 is a diagram illustrating an example of a configuration of a radio communication system according to an embodiment of the present invention.
Fig. 4 is a diagram illustrating an example of an operation of a radio communication system according to an embodiment of the present invention.
Fig. 5 is a flowchart illustrating an operation of a user equipment 20 in an embodiment of the present invention.
Fig. 6 is a diagram illustrating an example of a functional configuration of a base station apparatus 10 according to an embodiment of the present invention.
Fig. 7 is a diagram illustrating an example of a functional configuration of a user equipment 20 according to an embodiment of the present invention.
Fig. 8 is a diagram illustrating an example of a hardware configuration of the base station apparatus 10 or the user equipment 20 according to an embodiment of the present invention.

### [EMBODIMENTS OF THE INVENTION]

In the following, embodiments of the present invention are described with reference to the drawings. Noted that the embodiments described below are exemplary, and embodiments to which the present invention is applied are not limited to the following embodiments.

In an operation of a radio communication system according to an embodiment of the present invention, existing techniques are appropriately used. The existing technology is, for example, an existing LTE, but is not limited to the existing LTE. Furthermore, the term "LTE" as used in this specification is assumed to have a broad meaning that includes LTE-Advanced and successor systems of the LTE-Advanced (e.g., NR).

In an embodiment of the present invention, a duplex method may be a TDD (Time Division Duplex) method, FDD (Frequency Division Duplex) method, or any other method (e.g., Flexible Duplex, etc.). In the following description, a method of transmitting a signal using a transmit beam may be digital beam forming, in which a signal multiplied by a precoding vector (precoded by a precoding vector) is transmitted, or analog beam forming, in which beam forming is achieved using a variable phase shifter in an RF (Radio Frequency) circuit. Similarly, a method of receiving a signal using a reception beam may be digital beam forming, in which a received signal is multiplied by a predetermined weight vector, or analog beam forming, in which beam forming is achieved using a variable phase shifter in an RF circuit. Hybrid beam forming combining digital beam forming and analog beam forming may be applied. Transmitting a signal using a transmit beam may also be transmitting a signal through a particular antenna port. Similarly, receiving a signal using a reception beam may be receiving a signal through a particular antenna port. An antenna port is a logical antenna port or a physical antenna port defined in the 3GPP standard.

The method of forming the transmit beam and the reception beams is not limited to the above-described method. For example, in a base station apparatus 10 or a user equipment 20 having a plurality of antennas, a method for varying an angle of each antenna may be used, a method for combining a method for using precoding vectors and a method for varying the angle of the antenna may be used, a method for switching different antenna panels may be used, a method for combining methods using multiple antenna panels may be used, or another method may be used. For example, multiple different transmit beams may be used in a high frequency band. The use of multiple transmit beams is called multi-beam operation, and the use of a single transmit beam is called single beam operation.

In an embodiment of the present invention, configuring a radio parameter, etc., may be that a predetermined value is preconfigured, or that a radio parameter reported from the base station apparatus 10 or the user equipment 10 is configured.

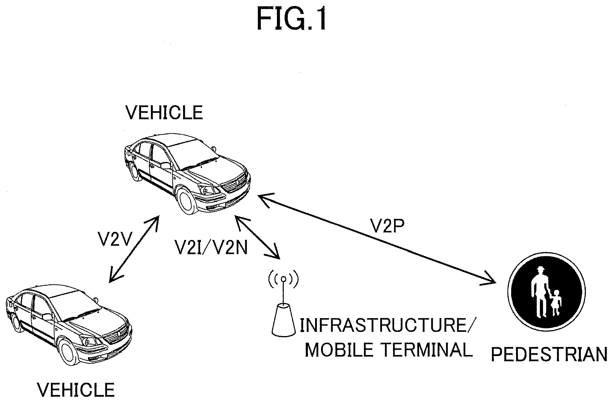

Fig. 1 is a diagram for illustrating V2X. In the 3GPP, it has been studied to enhance a D2D function to implement V2X (vehicle to Everything) or eV2X (enhanced V2X), and specifications have been developed. As illustrated in Fig. 1, V2X is a part of the Intelligent Transport Systems (ITS), and V2X is a generic term for V2V (Vehicle to Vehicle), which means a mode of communication between vehicles, V2I (Vehicle to Infrastructure), which means a mode of communication between vehicles and roadside units (RSU: Road-Side Units), V2N (Vehicle to Nomadic device), which means a mode of communication between vehicles and mobile devices owned by drivers, and V2P (Vehicle to Pedestrian), which means a mode of communication between vehicles and mobile devices owned by pedestrians.

In embodiments of the present invention, a mode is mainly assumed such that a communication device is installed in a vehicle, but the embodiments of the present invention are not limited to such a mode. For example, a communication device may be a terminal held by a person, or a communication device may be a device installed in a drone or an aircraft.

In LTE Rel-14, some functions of V2X have been specified. In the specification, Mode3 and Mode4 are specified for resource allocation for V2X communication to the user equipment 20. In Mode3, transmission resources are dynamically allocated by DCI (Downlink Control Information) sent from the base station apparatus 10 to the user equipment 20. In Mode3, SPS (Semi-Persistent Scheduling) is also allowed. In Mode4, the user equipment 20 autonomously selects a transmission resource from a resource pool.

Furthermore, in 3GPP, V2X has been studied that uses cellular communication and inter-terminal communication according to LTE or NR. It is assumed that, in V2X according to LTE or NR, a study that is not limited to the 3GPP specification will be progressed. For example, it is expected that the following items will be studied: ensuring interoperability; cost efficiency for implementing a higher layer; combining or switching multiple RATs (Radio Access Technologies); supporting regulation in each country; and data retrieving, delivering, database management, and use of a V2X platform according to LTE or NR.

Here, an example is described in which a group including a plurality of units of user equipment 20 is formed in the V2X, and a Relay UE for communicating with the base station apparatus 10 is determined. The Relay UE is one or more units of the user equipment 20 in the group and the Relay UE may have another name (e.g., UE-TYPE RSU, BS-TYPE RSU, micro BS, etc.). The formation of the group is called an association. The units of user equipment 20 in the group perform sidelink communication (hereinafter referred to as "SL (Sidelink) communication") with each other, and the user equipment 20 determined as a Relay UE communicates with the base station apparatus 10, as a relay node. The SL may be distinguished by differences in frequency or time resources from DL (Downlink) or UL (Uplink), and may have another name. Examples of cases are described below in which there are units of user equipment 20A, 20B, and 20C and a Relay UE is determined from the units of the user equipment 20A, 20B, or 20C.

The base station apparatus 10 detects received power (RSRP), received quality (RSRQ, SINR), or received strength (RSSI) in each unit of the user equipment 20 by transmitting signals to or receiving signals from each unit of the user equipment 20. Some or all of the received power, received quality, or received strength may be detected. Since each of the received power, the received quality, and the received strength is a value related to quality, the received power, the received quality, and the received strength may be collectively referred to as the "quality value." Furthermore, "quality" may be used as "quality value."

The base station apparatus 10 detects the received power, the received quality, or the received strength in each of the units of the user equipment 20A, 20B, and 20C by receiving, as a measurement report from a corresponding one of the units of the user equipment 20A, 20B, and 20C, the received power, the received quality, or the received strength measured by receiving a DL signal or an SL signal in the corresponding one of the units of the user equipment 20A, 20B, and 20C.

The base station apparatus 10 may also measure and detect the received power, received quality, or received strength from each of the units of the user equipment 20A, 20B, and 20C by receiving a UL signal or an SL signal transmitted from the corresponding one of the units of the user equipment 20A, 20B, and 20C.

The base station apparatus 10 determines a relay UE based on the quality value obtained as described above. For example, the base station apparatus 10 determines the user equipment 20 with the best quality value among the obtained plurality of quality values (e.g., a communication device with maximum DL or UL received power) as the Relay UE.

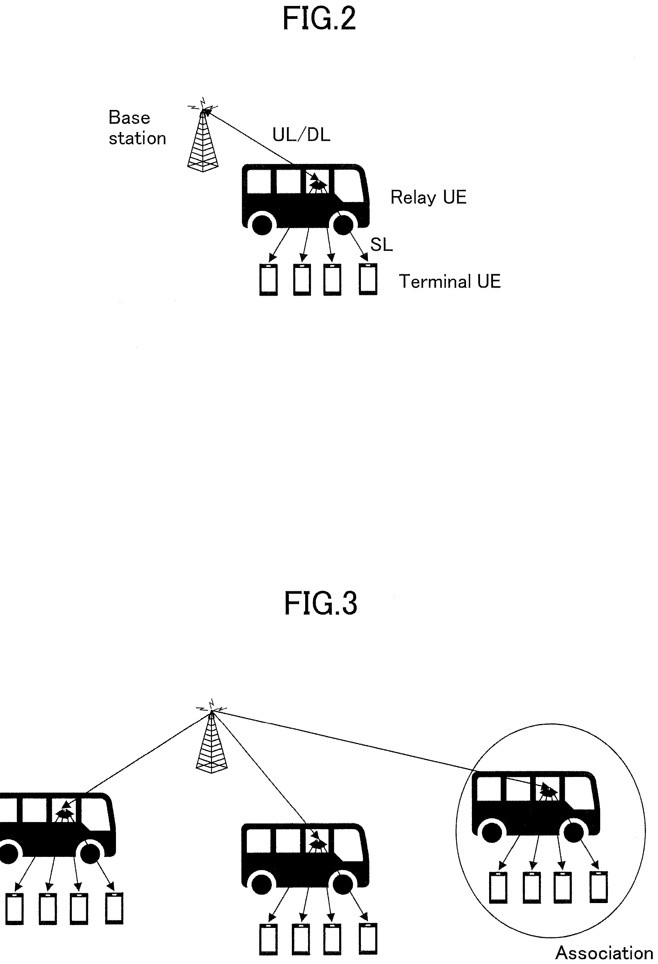

Fig. 2 is a diagram illustrating a radio communication system according to an embodiment of the present invention. As one of the requirements of eV2X, there is tethering. Tethering via a vehicle is to establish a connection between another unit of the user equipment 20, etc., and a network via the user equipment 20 installed in the vehicle. Tethering via a vehicle may be achieved by using SL communication in which the user equipment 20 that is the relay communicates with the base station 10. When the user equipment 20 installed in the vehicle operates as a relay node, capacity of the radio communication system can be increased or coverage of the radio communication system can be extended.

As illustrated in Fig. 2, the base station apparatus 10 (Base station) and the user equipment 20 (Relay UE) communicate with each other via UL and DL. Relay UE communicates with a plurality of units of user equipment 20 (Terminal UE) via SL. Relay UE may be the user equipment 20 installed in a vehicle or may be an infrastructure device or a mobile terminal.

Fig. 3 is a diagram illustrating an example of a configuration of a radio communication system according to an embodiment of the present invention. For executing tethering via a vehicle, it is required to establish a relay connection. As illustrated in Fig. 3, the associated plurality of units of the user equipment 20 establishes a relay connection with a network via the user equipment 20 that is to be a relay. Associating a plurality of units of the user equipment 20 is referred to as an association, and prior to performing the association, information for assisting the association is required in the user equipment 20 that is to be a Terminal UE. In Fig. 3, an example is illustrated in which a number of units of the user equipment 20 that are to be associated Terminal UEs is 4 and a number of associated groups is 3. However, the numbers may be greater or smaller.

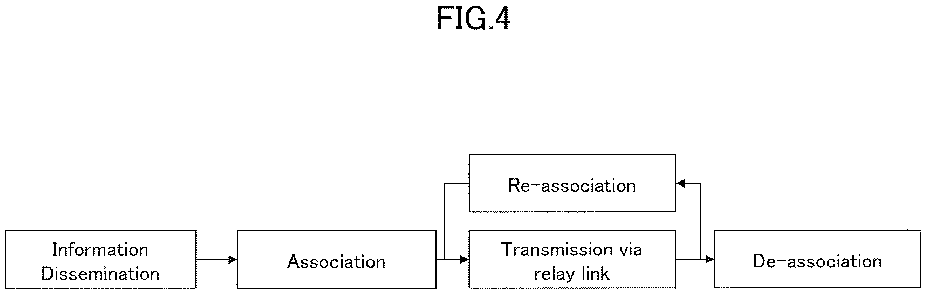

Fig. 4 is a diagram illustrating an example of an operation of a radio communication system according to an embodiment of the present invention. In Fig. 4, an example of an operation related to an association between a Relay UE and a Terminal UE is described.

The "Information Dissemination" illustrated in Fig. 4 corresponds to an operation in which the Terminal UE retrieves information for assisting an association. In the "Information Dissemination," after the Terminal UE retrieves information for assisting an association, "Association" is performed. "Association" corresponds to an operation for associating a Relay UE and a Terminal UE. After "Association," in "Transmission via relay link," the Terminal UE communicates with a network via the Relay UE.

"Re-association" corresponds to an operation for changing the Relay UE or the Terminal UE to be associated. For example, in "Re-association," the user equipment 20 to be a Relay UE may be changed or the user equipment 20 to be a Terminal UE may be added or deleted. "De-association" corresponds to an operation to release an association.

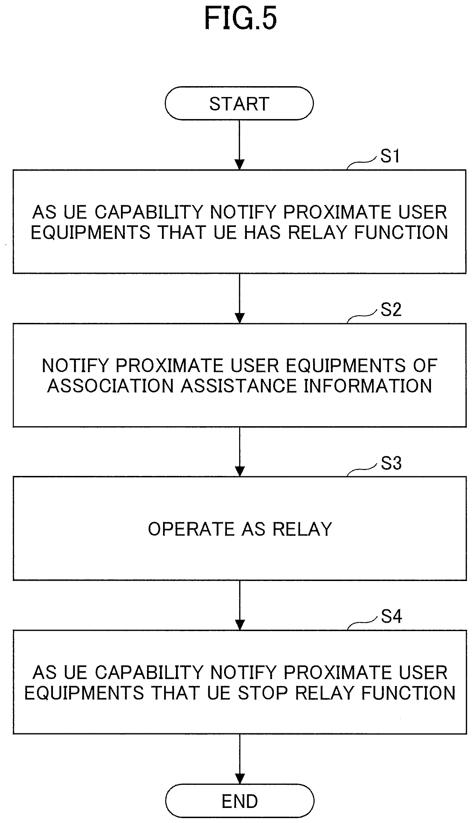

Fig. 5 is a flowchart illustrating an operation of the user equipment 20 in an embodiment of the present invention. In Fig. 5, an operation of the user equipment 20 that is to be a Relay UE is described.

In step S1, the user equipment 20 that is to be a Relay UE transmits UE capability representing that the user equipment 20 has a relay function to one or more units of the user equipment 20 in the vicinity. Such a notification may be made autonomously by the user equipment 20 that is to be a Relay UE. Notification of the UE capability indicating whether a relay function is provided may be transmitted through multicast or unicast by SL communication, or the notification of the UE capability indicating whether a relay function is provided may be transmitted through multicast or unicast by DL communication via the base station apparatus 10.

The UE capability indicating whether a relay function is provided may also be notified using PHY layer signaling or higher layer signaling. For example, it may be notified by one bit information included in PSBCH (Physical Sidelink Broadcast Channel). Alternatively, it may be notified by configuring SLSS with a specific sequence. Alternatively, one bit information indicating whether a relay function is provided may be notified by control information included in PSCCH (Physical Sidelink Control Channel), a MAC control element (Control Element), or RRC signaling. The UE capability indicating whether a relay function is provided may be notified by notification through PSBCH or PSSCH that is masked by a specific RNTI (Radio Network Temporary Identifier) or a RNTI that is common within an associated group.

In step S2, the user equipment 20 that is to be a Relay UE notifies association assistance information to the user equipment 20 in the vicinity. The association assistance information may include, for example, information items 1) through 6) below. 1) Information on power measurement between a Relay UE and the base station apparatus 10. Information on the power measurement from the base station apparatus 10 with respect to the Relay UE is, for example, information on a DL power measurement. 2) Information indicating the maximum number of Terminal UEs that can be associated with a Relay UE. 3) Information indicating a number of Terminal UEs that have already been associated with a Relay UE. 4) Information indicating a number of Terminal UEs that can be further associated with Relay UE from the present time. 5) ID to identify a Relay UE. 6) Information indicating resources used for communication with a Relay UE (such as information about frequency or time resources).

Association assistance information may be notified using PHY layer signaling or higher layer signaling. For example, association assistance information may be notified by control information included in PSBCH or PSCCH, MAC control elements (control elements), or RRC signaling. A notification through PSBCH or PSCCH may be masked by a specific RNTI or a RNTI that is common within an associated group.

In the notification of information, a notification with multiple stages may be made. For example, in the first stage, information indicating whether a relay function is provided may be notified, and the association assistance information may be notified in the second stage or later. For example, in the first or the second stage, in addition to information indicating whether a relay function is provided, information indicating a relay transmission rate may be notified by a plurality of bits.

In each stage, signaling or a channel used for notifying information may be defined or configured. For example, the information of the first stage is notified through PSBCH and the information of the second stage or layer may be notified through PSCCH or PSDCH.

Here, the user equipment 20 that is to be a Terminal UE may perform the operations indicated in 1)-3) below. 1) A Terminal UE decodes the information in the next stage upon successfully obtaining the information in the stage immediately before. 2) A Terminal UE decodes information in the next stage based on the information in the stage immediately before. For example, in the first stage, if it is notified that relay capability is provided, the information in the second stage or later is decoded. 3) A Terminal UE decodes information in the next stage if the information in the stage immediately before indicates that the stage proceeds to the next stage. When the information indicates that the stage proceeds to the next stage, the notification may be made explicitly or the notification may be made implicitly based on the UE capability or a category of the Relay UE or the Terminal UE. As an example in which the notification is made implicitly, when a predetermined reference level is satisfied based on a supported data rate, a maximum delay amount, and a service type of the UE capability, of the Relay UE, the information in the next stage may be decoded. Additionally, as an example in which the notification is made implicitly, when a predetermined reference level is satisfied based on a required data rate, a maximum delay amount, and a service type, of the UE capability of the Terminal UE, the information in the next stage may be decoded.

A notification of the information indicating whether a relay function is provided and the association assistance information may be made on a user equipment 20-by-user equipment 20 basis, or on a cell-by-cell basis. For example, permission to notify the information indicating whether a relay function is provided and the association assistance information may be notified from the base station apparatus 10 to the user equipment 20 through PBCH.

The notification of the information indicating whether a relay function is provided and the association assistance information may be made periodically or may be made on a basis of event trigger. For example, triggering may be made based on the conditions 1) through 3) below. 1) A DL power measurement value from the base station apparatus 10 to the user equipment 20 that is a Relay UE or a terminal UE exceeds a predetermined threshold value. 2) A congestion level becomes lower than a predetermined threshold value. For example, when a CBR (Channel busy ratio) of a resource pool used for the relayed SL communication becomes lower than a predetermined threshold value, the notification may be triggered for the Relay UE or the Terminal UE performing the SL communication. 3) A state in which a congestion level is lower than a predetermined threshold level continues for a predetermined period of time. For example, when a state in which a CBR of a resource pool used for the relayed SL communication is lower than a predetermined threshold level continues for a predetermined period of time, the notification may be triggered for the Relay UE or the Terminal UE performing the SL communication.

The notification of the information indicating whether a relay function is provided and the association assistance information may be stopped based on the following conditions 1) and 2). Note that, based on the following conditions 1) and 2), a release of an association or a termination of transmission may be triggered. 1) A congestion level exceeds a predetermined threshold value. For example, when a CBR of a resource pool used for the relayed SL communication exceeds a predetermined threshold value, the notification may be stopped for the Relay UE or the Terminal UE performing SL communication. 2) A state in which a congestion level exceeds a predetermined threshold value continues for a predetermined period of time. For example, when a state in which a CBR of a resource pool used for the relayed SL communication exceeds a predetermined threshold value continues for a predetermined period of time, the notification may be stopped for the Relay UE or the Terminal UE performing the SL communication.

The notification of the information indicating whether a relay function is provided and the association assistance information may be performed only on a specific resource pool for the SL communication by the Relay UE or the Terminal UE. For example, in a specific resource pool, a configuration may be made whether to permit the notification of the information indicating whether a relay function is provided and the association assistance information, on a basis of resource pool-by-resource pool, or on a basis of user equipment 20-by-user equipment 20 basis.

In step S3, the user equipment 20 that is to be a Relay UE establishes SL communication with the user equipment 20 in the vicinity that is to be a Terminal UE based on the notification of the information in step S2, and the user equipment 20 that is to be a Relay UE communicates with the base station apparatus 10 and operates as a relay.

In step S4, the user equipment 20 that is to be a Relay UE notifies the user equipment 20 in the vicinity of information indicating suspension of a relay function, while including the information in the UE capability, similar to the information indicating whether a relay function is provided. Information indicating whether a relay function is provided and information indicating suspension of the relay function may be notified as the same information. For example, when one bit information is used, a status "1" may indicate that the relay function is provided and a status "0" may indicate that a relay function is not provided or a relay function is suspended.

In accordance with the above-described embodiments, the user equipment 20 can provide a notification of information indicating whether a relay function is provided and association assistance information to the user equipment 20 in the vicinity, establish a relay connection, and operate as a relay.

Namely, during inter-terminal direct communication, information required by a terminal to establish a connection with a terminal provided with a relay function can be obtained.

### (Device Configuration)

Next, functional configuration examples of a base station apparatus 10 and a user equipment 20 that perform the processing and operations described above are described. Each of the base station apparatus 10 and the user equipment 20 includes functions practicing the implementation described above. However, each of the base station apparatus 10 and the user equipment 20 may comprise only some functions in the implementation.

### <Base station apparatus 10>

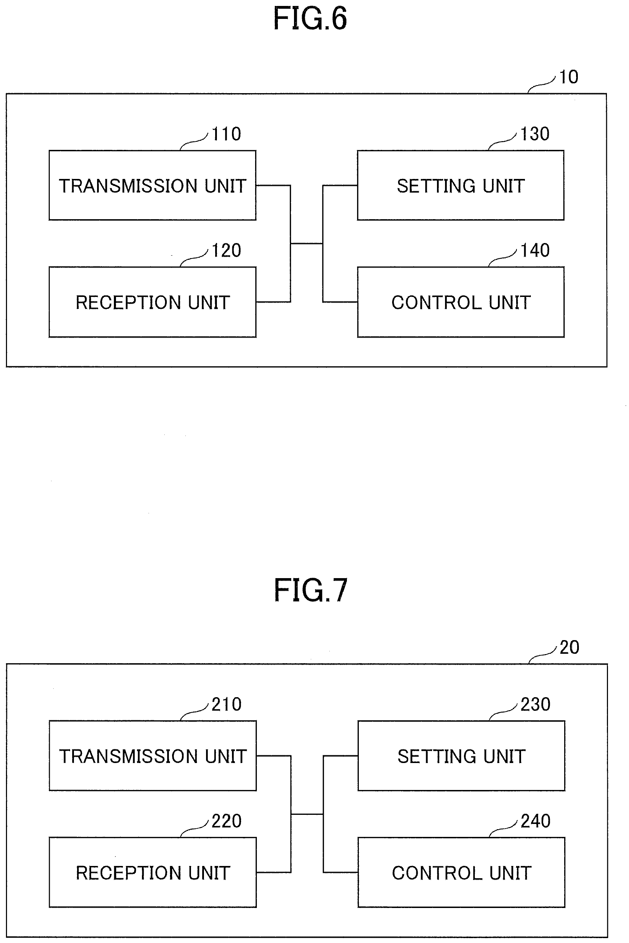

Fig. 6 is a diagram illustrating an example of a functional configuration of a base station apparatus 10. As illustrated in Fig. 6, the base station apparatus 10 includes a transmission unit 110, a reception unit 120, a setting unit 130, and a control unit 140. The functional configuration illustrated in Fig. 6 is only an example. Division of the functions and names of functional units may be determined arbitrarily as long as the operations according to the embodiment of the present invention can be performed.

The transmission unit 110 includes a function that generates a signal to be transmitted to a user equipment 20 side and wirelessly transmits the signal. The reception unit 120 includes a function that receives various signals transmitted from a user equipment 20, and obtains, for example, information of a higher layer from the received signal. Also, the transmission unit 110 has a function that transmits NR-PSS, NR-SSS, NR-PBCH, DL/UL control signals and the like to the user equipment 20. For example, the transmission unit 110 transmits, to the user equipment 20, information indicating that another terminal is in the vicinity, and the reception unit 120 receives terminal information from the user equipment 20.

The setting unit 130 stores pre-set configuration information and various types of configuration information to be transmitted to the user equipment 20 in a storage device, and reads the information from the storage device as appropriate. Contents of the configuration information are, for example, information regarding transmit and receive parameters of D2D communication and so on.

As described in the embodiments, the control unit 140 performs a processing related to a configuration for communicating with the user equipment 20 that is to be a relay. The control unit 140 performs a process of notifying the user equipment 20 of information related to a configuration of radio communication. A functional unit related to signal transmission in the control unit 140 may be included in the transmission unit 110, and a functional unit related to signal reception in the control unit 140 may be included in the reception unit 120.

### <User equipment 20>

Fig. 7 is a diagram illustrating an example of a functional configuration of a user equipment 20. As illustrated in Fig. 7, the user equipment 20 comprises a transmission unit 210, a reception unit 220, a setting unit 230, and a control unit 240. The functional configuration illustrated in Fig. 7 is only an example. Division of the functions and names of functional units may be determined arbitrarily as long as the operations according to the embodiment of the present invention can be performed.

The transmission unit 210 generates a transmit signal from transmit data and wirelessly transmits the transmit signal. The reception unit 220 wirelessly receives various signals and obtains a higher layer signal from the received physical layer signal. Also, the reception unit 220 has a function that receives NR-PSS, NR-SSS, NR-PBCH, DL/UL/SL control signals and the like transmitted from a base station apparatus 10. Also, for example, the transmission unit 210 transmits, to another user equipment 20, PSCCH (Physical Sidelink Control Channel), PSSCH (Physical Sidelink Shared Channel), PSDCH (Physical Sidelink Discovery Channel), PSBCH (Physical Sidelink Broadcast Channel) or the like as D2D communication, and the reception unit 120 receives PSCCH, PSSCH, PSDCH, PSBCH or the like from another user equipment 20.

The setting unit 230 stores various pieces of configuration information received by the reception unit 220 from the base station apparatus 10 or user equipment 20 in a storage device, and reads the information from the storage device as appropriate. The setting unit 230 also stores pre-set configuration information. Contents of the configuration information are, for example, information regarding transmit and receive parameters of D2D communication and so on.

The control unit 240 controls D2D communication with another user equipment 20, as described in the implementation. Furthermore, the control unit 240 controls an operation related to a relay function for relaying communication from another user equipment 20 to the base station apparatus 10. Furthermore, the control unit 240 receives information related to radio communication from the base station apparatus 10 to control radio communication of the user equipment 20 based on the information, and reports required information to the base station apparatus 10. A functional unit related to signal transmission in the control unit 240 may be included in the transmission unit 210 and a functional unit related to signal reception in the control unit 240 may be included in the reception unit 220.

### <Hardware Configuration>

The functional configuration diagrams (Fig. 6 and Fig. 7) used in the description of the embodiment of the present invention set forth above illustrate the blocks in the units of functions. These functional blocks (constituent units) are embodied in any combination of hardware and/or software. Means for embodying each functional block is not particularly limited. That is, each functional block may be embodied by one device into which a plurality of elements is physically and/or logically coupled or may be embodied by two or more devices that are physically and/or logically separated and that are connected directly and/or indirectly (for example, in a wired and/or wireless manner).

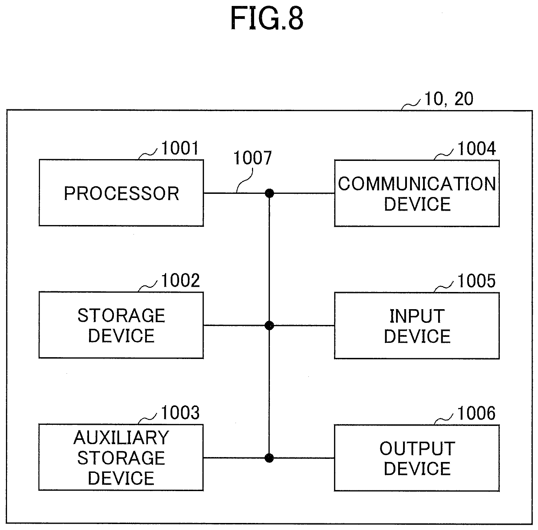

For example, any of a base station apparatus 10 and a user equipment 20 in an embodiment of the present invention may function as a computer that performs the processing according to the embodiment of the present invention. Fig. 8 is a diagram illustrating an example of a hardware configuration of a radio communication device that is a base station apparatus 10 or a user equipment 20 according to an embodiment of the present invention. Each of the base station apparatus 10 and the user equipment 20 described above may be physically configured as a computer device including a processor 1001, a storage device 1002, an auxiliary storage device 1003, a communication device 1004, an input device 1005, an output device 1006, a bus 1007, and the like.

In the following description, the term "device" may be interchanged with a circuit, an apparatus, a unit, or the like. The hardware configurations of the base station apparatus 10 and the user equipment 20 may include one or more devices 1001, one or more devices 1002, one or more devices 1003, one or more devices 1004, one or more devices 1005, and one or more device 1006, or may not include some of the devices.

Each function in the base station apparatus 10 and the user equipment 20 is implemented by causing hardware such as the processor 1001 and the storage device 1002 to read predetermined software (program) and causing the processor 1001 to perform computation and to control communication by the communication device 1004 and reading and/or writing of data in the storage device 1002 and the auxiliary storage device 1003.

The processor 1001 controls the entire computer, for example, by operating an operating system. The processor 1001 may be formed of a central processing unit (CPU) including an interface with peripheral devices, a control device, a computation device, a register, and the like.

The processor 1001 reads a program (program codes), a software module, or data from the auxiliary storage device 1003 and/or the communication device 1004 to the storage device 1002, and performs various processing operations in accordance therewith. As the program, a program causing a computer to perform at least some of the operations in the embodiment described above is used. For example, the transmission unit 110, the reception unit 120, the setting unit 130, and the control unit 140 of the base station apparatus 10 illustrated in Fig. 6 may be embodied by a control program that is stored in the storage device 1002 and operated by the processor 1001. For example, the transmission unit 210, the reception unit 220, the setting unit 230, and the control unit 240 of the user equipment 20 illustrated in Fig. 7 may be embodied by a control program that is stored in the storage device 1002 and operated by the processor 1001. Although the various processing operations set forth above have been described as being performed by a single processor 1001, the various processing operations set forth above may be performed simultaneously or sequentially by two or more processors 1001. The processor 1001 may be implemented as one or more chips. The program may be transmitted from a network via an electric communication line.

The storage device 1002 is a computer-readable recording medium and may be formed of, for example, at least one of an ROM (Read Only Memory), an EPROM (Erasable Programmable ROM), an EEPROM (Electrically Erasable Programmable ROM), a RAM (Random Access Memory), and the like. The storage device 1002 may be called as a register, a cache, or a main memory (a main storage device). The storage device 1002 can store a program (program codes), a software module, and the like that can be executed to perform processing operations according to an embodiment of the present invention.

The auxiliary storage device 1003 is a computer-readable recording medium and may be formed of, for example, at least one of an optical disc such as a CD-ROM (Compact Disc ROM), a hard disk drive, a flexible disk, a magneto-optical disk (such as a compact disk, a digital versatile disk, or a Blu-ray (registered trademark) disk), a smart card, a flash memory (such as a card, a stick, or a key drive), a floppy (registered trademark) disk, a magnetic strip, and the like. The auxiliary storage device 1003 may be called as an auxiliary storage device. The recording medium described above may be a database including the storage device 1002 and/or the auxiliary storage device 1003, a server, or another appropriate medium.

The communication device 1004 is hardware (a transceiver device) for performing communication between computers via a wired network and/or a wireless network and is referred to as, for example, a network device, a network controller, a network card, a communication module, or the like. For example, the transmission unit 110 and the reception unit 120 of the base station apparatus 10 may be embodied by the communication device 1004. The transmission unit 210 and the reception unit 220 of the user equipment 20 may be embodied by the communication device 1004.

The input device 1005 is an input device (such as, for example, a keyboard, a mouse, a microphone, a switch, a button, a sensor, or the like) that receives an input from the outside. The output device 1006 is an output device (such as, for example, a display, a speaker, an LED lamp, or the like) that performs outputting to the outside. The input device 1005 and the output device 1006 may be configured to be integrated (such as a touch panel).

The devices such as the processor 1001 and the storage device 1002 are connected to each other via the bus 1007 for transferring information. The bus 1007 may be formed of a single bus or may be formed of different buses between the devices.

Each of the base station apparatus 10 and the user equipment 20 may be configured to include hardware such as a microprocessor, a DSP (Digital Signal Processor), an ASIC (Application Specific Integrated Circuit), a PLD (Programmable Logic Device), an FPGA (Field Programmable Gate Array), or the like, or a part or all of the functional blocks may be embodied by the hardware. For example, the processor 1001 may be implemented [as at least one of the above hardware modules.

### (Conclusion of the embodiments)

As described above, according to the embodiments of the present invention, there is provided a user equipment including a communication unit that communicates with another user equipment and a base station apparatus; a notification unit that transmits, to the other user equipment, information indicating whether a relay function is provided; and a control unit that operates as a relay for relaying communication between the other user equipment and the base station apparatus.

With the above-described configuration, the user equipment 20 can transmit information indicating whether a relay function is provided to a user equipment 20 in the vicinity, establish a relay connection, and operate as a relay. Namely, during inter-terminal direct communication, information required by a terminal to establish a connection with a terminal provided with a relay function can be obtained.

The information indicating whether the relay function is provided may be transmitted by a physical layer signaling, a higher layer signaling, or a specific sequence of SLSS, through sidelink communication. With such a configuration, the user equipment 20 can transmit information indicating whether a relay function is provided to a user equipment 20 in the vicinity, establish a relay connection, and operate as a relay.

The notification unit may transmit, to the other user equipment, information for assisting establishment of a connection with the other user equipment. With such a configuration, the user equipment 20 can transmit association assistance information to a user equipment 20 in the vicinity, establish a relay connection, and operate as a relay.

The information for assisting the establishment of the connection with the other user equipment may include at least one of a power measurement value for communication with the base station apparatus, a maximum number of units of user equipment capable of establishing a connection with the user equipment, a number of units of user equipment that have already established a connection with the user equipment, a number of units of user equipment capable of further establishing a connection from a present time, and an identifier for identifying the user equipment. With such a configuration, the user equipment 20 can transmit association assistance information to a user equipment 20 in the vicinity, establish a relay connection, and operate as a relay.

Upon successfully obtaining the information indicating whether the relay function is provided, the user equipment may decode information for assisting establishment of a connection with another user equipment. With such a configuration, after obtaining the information indicating whether a relay function is provided, the user equipment 20 can obtain association assistance information depending on necessity, and, based on the information, the user equipment 20 can communicate with the base station apparatus 10 through the user equipment 20 provided with the relay function.

Furthermore, according to the embodiments of the present invention, there is provided a base station apparatus including a communication unit that communicates with a plurality of units of user equipment; a notification unit that transmits information indicating whether a user equipment is provided with a relay function to another user equipment; and a control unit that communicates with the other user equipment through the user equipment that operates as a relay.

With the above-described configuration, the base station apparatus 10 can transmit information indicating whether a relay function is provided to the user equipment 20, establish a relay connection, and operate as a relay. Namely, during inter-terminal direct communication, information required by a terminal to establish a connection with a terminal provided with a relay function can be obtained.

### (Supplemental Embodiment)

While the embodiments of the present invention have been described above, the disclosed inventions are not limited to the embodiments, but it could be understood by those skilled in the art that various modifications, alterations, alternatives, replacements, and the like can be made thereto. While specific numerical examples have been used to facilitate understanding of the present invention, the numerical values are only examples and any appropriate values may be used, unless otherwise specified. The sorting of articles in the above description is not essential to the present invention, but matters described in two or more articles may be combined for use if necessary, or matters described in one article may be applied to matters described in another article (unless incompatible). The boundaries of the functional units or the processing units in the functional block diagrams do not necessarily correspond to boundaries of physical components. Operations of two or more functional units may be performed physically by a single component or an operation of a single functional unit may be performed physically by two or more components. Regarding the processing procedure described in the embodiment, the order of the processing operations may be changed unless incompatible. For convenience of explanation of the processing, the base station apparatus 10 and the user equipment 20 have been described using the functional block diagrams, but such devices may be embodied in hardware, software, or a combination thereof. Software operated by the processor of the base station apparatus 10 according to the embodiment of the present invention and software operated by the processor of the user equipment 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Notification of information is not limited to the aspects/embodiments described in this specification, but may be performed using other methods. For example, the notification of information may be performed by a physical layer signaling (such as DCI (Downlink Control Information), UCI (Uplink Control Information), or the like), a higher layer signaling (such as an RRC (Radio Resource Control) signaling, a MAC (Medium Access Control) signaling, broadcast information (MIB (Master Information Block), SIB (System Information Block), or the like), other signals, or any combination thereof. The RRC signaling may be called as an RRC message and may be, for example, an RRC connection setup message, an RRC connection reconfiguration message, or the like.

The aspects/embodiments described in this specification may be applied to systems utilizing LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or next-generation systems to which the systems are extended.

The processing procedures, sequences, flowcharts, and the like of the aspects/embodiments described in this specification may be changed in the order as long as they are not incompatible with each other. For example, in the method described in this specification, various step elements are presented in an exemplary order, but the method is not limited to the presented order.

The specific operations which are performed by the base station apparatus 10 in this specification may be performed by an upper node thereof in some cases. In a network comprising one or more network nodes including the base station apparatus 10, it is obvious that various operations which are performed to communicate with the user equipment 20 can be performed by the base station apparatus 10 and/or another network node (for example, an MME or an S-GW can be considered but the network node is not limited thereto) other than the base station apparatus 10. Although a case where the number of network nodes other than the base station apparatus 10 is one has been illustrated above, a combination of two or more other network nodes (for example, an MME and an S-GW) may be used.

The aspects/embodiments described in this specification may be used alone, may be used in combination, or may be switched with implementation thereof.

The user equipment 20 may also be called as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station apparatus 10 may be called as an NB (NodeB), an eNB (enhanced NodeB), a gNB, a base station, or some other appropriate terms by those skilled in the art.

The terms "determine (determining)" and "decide (determining)" used in this specification may include various types of operations. For example, "determining" and "deciding" may include deeming that a result of calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The expression "based on" as used in this specification does not mean only "based on only," unless otherwise specified. That is, the expression "based on" means both "based on" and "based on at least."

As long as the terms "include" and "including" and derivatives thereof are used in this specification or the appended claims, the terms are intended to have a comprehensive meaning similarly to the term "comprising." Further, the term "or" as used in this specification or the appended claims is intended not to mean an exclusive or.

In the entire disclosure, for example, when an article such as a, an, or the is added in translation into English, such an article may include the plural unless otherwise recognized from the context.

In the embodiments of the present invention, the control unit 240 is an example of a notification unit or a control unit. The transmission unit 210 or the reception unit 220 is an example of a communication unit. The control unit 140 is an example of a notification unit or a control unit. The transmission unit 110 or the reception unit 120 is an example of a communication unit. The association assistance information is an example of information for assisting establishment of a connection with another user equipment.

Although the present invention is described in detail, it is obvious to those skilled in the art that the present invention is not limited to the embodiments described in this specification. The present invention can be practiced as modifications and alterations without departing from the gist and scope of the present invention defined by the description in the appended claims. Accordingly, the description in this specification is intended to be exemplary and does not have any restrictive meaning to the present invention.

### LIST OF REFERENCE SYMBOLS

- 10: base station apparatus
- 110: transmission unit
- 120: reception unit
- 130: setting unit
- 140: control unit
- 20: user equipment
- 210: transmission unit
- 220: reception unit
- 230: setting unit
- 240: control unit
- 1001: processor
- 1002: storage device
- 1003: auxiliary storage device
- 1004: communication device
- 1005: input device
- 1006: output device

## Claims

1. A user equipment comprising:
a communication unit that communicates with another user equipment and a base station apparatus;
a notification unit that transmits, to the other user equipment, information indicating whether a relay function is provided; and
a control unit that operates as a relay for relaying communication between the other user equipment and the base station apparatus.

2. The user equipment according to claim 1, wherein the information indicating whether the relay function is provided is transmitted by a physical layer signaling, a higher layer signaling, or a specific sequence of SLSS, through sidelink communication.

3. The user equipment according to claim 1, wherein the notification unit transmits, to the other user equipment, information for assisting establishment of a connection with the other user equipment.

4. The user equipment according to claim 3, wherein the information for assisting the establishment of the connection with the other user equipment includes at least one of a power measurement value for communication with the base station apparatus, a maximum number of units of user equipment capable of establishing a connection with the user equipment, a number of units of user equipment that have already established a connection with the user equipment, a number of units of user equipment capable of further establishing a connection from a present time, and an identifier for identifying the user equipment.

5. The user equipment according to claim 1, wherein, upon successfully obtaining the information indicating whether the relay function is provided, the user equipment decodes information for assisting establishment of a connection with another user equipment.

6. A base station apparatus comprising:
a communication unit that communicates with a plurality of units of user equipment;
a notification unit that transmits information indicating whether a user equipment is provided with a relay function to another user equipment; and
a control unit that communicates with the other user equipment through the user equipment that operates as a relay.
